# EUROPEAN PATENT APPLICATION

(11) **EP 1 961 777 A1**
(43) Date of publication of application: **27.08.2008**
(21) Application number: 07003935.9
(22) Date of filing: 26.02.2007
(51) Int. Cl.: C08F 210/16, C08L 23/08, H01B 3/44

(54) **Polyolefin homo- or copolymer with decreased shrinkage sensivity and improved crystallization behavior**

(71) Applicant: Borealis Technology Oy, 06101 Porvoo (FI)
(72) Inventor: Carlsson, Roger, 42370 Säve (SE); Eggen, Svein Staal, 3947 Langangen (NO)
(74) Representative: Kador & Partner

(57) **Abstract**

Polyolefin homo- or copolymer comprising a component (A) and a component (B), wherein components (A) and (B) have different average molecular weights , and wherein the absolute value of the density difference of component (A) and component (B) is below 0.037 g/cm³ and wherein the polyolefin homo- or copolymer comprises more than 93 mol.% ethylene and has a density of greater than 0.925 g/cm³.

## Description

The present invention relates to a polyolefin homo- or copolymer according to claim 1 comprising a component (A) and a component (B), wherein components (A) and (B) have different average molecular weights , and wherein the absolute value of the density difference of component (A) and component (B) is below 0.037 g/cm³ and wherein the polyolefin homo- or copolymer comprises more than 93 mol% ethylene and has a density of greater than 0.925 g/cm³.

The invention further relates to a cable according to claim 15 comprising a jacket comprising the polyolefin homo- or copolymer according to claim 1 and a pigment. The present invention further relates to the use of the polyolefin homo- or copolymer as a power cable jacket.

Cables, such as power cables or communication cables, usually comprise an inner core which comprises a conducting element such as a metal wire or a glass fiber, and one or more outer layers for shielding and protecting the conducting element. The outer layers have mainly protective purpose and are usually referred to as jackets or sheath.

Polyolefin, particularly polyethylene compositions for the use as a cable jacket are known. Important properties of the material used for a cable jacket are good processability, immunity towards environmental stress cracking, insensitivity to a broad temperature range when being used and low shrinkage of the final cable jacket. High shrinkage of the jacket material creates stress in the fibers of fiber-optical cables which in turn results in transmission loss in the cable. Furthermore, longitudinal shrinkage is of great importance for power cables because there is a risk that the cable jacket may slip out of a protective covering when being heated thus leaving the assembly unprotected from the elements. Moreover, low shrinkage is essential for PVC-replacement in power cables, particularly in France, Germany and Spain for fulfilling standardization requirements.

It is a standard technique to add pigments to a cable jacketing polymer composition in order to change the natural color of the produced jacket. Often, carbon black is added to the polymer composition for the cable jacketing to produce a black cable jacket. Coloring of a cable jacket may further be required due to safety purposes.

Different pigments have different impact on the jacket material particularly with respect to shrinkage properties. Generally, pigments can be divided into warping and non-warping pigments. The present invention has the advantage that it is not necessary to use specific non-warping pigments whereby the costs can be significantly reduced. Further, the risk of using the wrong pigment is eliminated. Such wrong use can originate from change of the pigments being carried out by the pigment producers without specifically indicating the problems associated therewith. The present invention further has the advantage that the density of the material is improved whereby the mechanical properties and hardness are improved. Additionally, the balance of mechanical properties and abrasion resistance are improved by the invention. As a reference of a warping pigment 285-RD-50 may be mentioned, which is a red pigment master batch from Polyone. Warping or non-warping properties generally are mentioned in the data-sheets from the pigment manufacturers. Warping pigments have the ability to act as nucleating agents and hence speed up crystallization, thereby the relaxation time of an oriented object is reduced. During cable extrusion the polymer chains get oriented along the extrusion direction. Insufficient relaxation time insofar results in increased shrink back. The ability for an additive to nucleate can be measured by iso-thermal crystallization time. The crystallization time insofar determines the shrink back of extruded objects. The shrink back is a specific problem of bimodal or multimodal polymers. The present invention solves the problem of high shrink back when using warping pigments.

For a more detailed discussion as regards shrink back and bimodal polyethylene reference is made to EP 1327664.

The inventive polyolefin homo- or copolymer comprises a component (A) and a component (B), wherein components (A) and (B) have different average molecular weights. The polyolefin homo- or copolymer is insofar a bimodal or multi-modal polymer. It is preferred that the two components (A) and (B) form an in-situ blend. An in-situ blend is formed by chemically blending two fractions in at least two reaction stages. The absolute value of the density difference of component (A) and component (B) shall be below 0.037 g/cm³. Since component (A) and component (B) are made in a two-stage process, it is not possible to directly measure the density of component (B) which is made in the second reaction stage. Therefore, all data referring to the density or the melt flow rate of component (B) refer to calculated data on the basis of a simple calculation with respect to density or on the basis of the Hagström equation. The Hagström equation is known from the article "Prediction of melt flow rate (MFR) of bimodal polythylene's based on MFR of their components", published in Struktur isse 4 from 1997 written by Bengt Hagström and published as Extended Abstracts and Final Programme of the Europe/Africa Region Meeting in Gothenburg, Sweden, August 19-21, 1997. These documents are incorporated by reference herewith. The polyolefin homo- or copolymer according to the present invention moreover comprises more than 93 mol% ethylene and has a density of above 0.925 g/cm³.

Preferably, the polyolefin homo- or copolymer has a melt flow rate (190°C, ISO 1133; 2.16 kg load) of 0.1 to 3.0 g/10 min, preferably 0.2 to 2.0 g/10 min and most preferably 0.5 to 2.0 g/10 min. The density of the polyolefin homo- or copolymer according to the present invention shall preferably be higher than 0.935 g/cm³ and more preferably 0.937 g/cm³ and most preferably higher than 0.940 g/cm³.

Component (A) shall preferably have a density of 0.930 to 0.975 g/cm³, more preferably 0.945 to 0.975 g/cm and most preferably 0.945 to 0.965 g/cm³.

The melt flow rate MFR₂ of component (A) is generally in a range of 50 to 5000 g/10 min, preferably 100 to 1000 g/10 min, more preferably 200 to 600 g/10 min and most preferably 350 to 500 g/10 min.

Component (B) of the polyolefin homo- or copolymer according to the present invention preferably has a density of 0.880 to 0.936 g/cm³, more preferably 0.910 to 0.935 g/cm³ and most preferably of 0.915 to 0.929.

The melt flow rate MFR₂ (190°C, ISO 1133; 2.16 kg load) of component (B) shall preferably be in the range of 0.01 to 0.8 g/10 min and more preferably 0.05 to 3 g/10 min. The MFR₂ of compound (B) is calculated with the above-mentioned Hagström equation.

The polyolefin copolymer according to the present invention preferably includes at least one comonomer, whereby the comonomer is selected from C₃-C₁₂ α-olefins. The at least one comonomer may be selected from propylene, 1-butyhlene, 4-methylene-1-pentene, 1-hexene and 1-octene.
Preferably, the comonomer content of the polyolefin copolymer according to the present invention is in the range of 0.02 to 5 mol% and more preferably 0.05 to 2 mol%.

In a first embodiment component (A) is a fraction having a lower average molecular weight than component (B) and at the same time a higher density than component (B). In another embodiment component (A) is a fraction having a higher average molecular weight than component (B) and at the same time a higher density.

The process for the production of a polyolefin homo- or copolymer according to the present invention is in principle known from WO 97/03124 which is hereby incorporated by reference. Further information on the multistage process for the production of a polyolefin homo- or copolymer according to the present invention is provided by EP 040 992, EP 041 796, EP 022 376, WO 92/12182. These documents shall be included by reference. The described multi-stage processes require at least two main polymerization stages which can independently be carried out under liquid, slurry or gas phase conditions. Preferred combinations of reaction conditions in the main polymerization stages are slurry and gas phase. Polymerization in a slurry phase is preferably carried out in a loop reactor.

In a preferred process for the production of the polyolefin homo- or copolymer, the first reaction stage is carried out in slurry, preferably in a loop reactor in the liquid phase of an inert low boiling hydrocarbon medium. The reaction mixture is then discharged after polymerization from the reactor to the second reactor wherein the following reaction is preferably carried out in a gas phase in the presence of gaseous ethylene.

The polyolefin homo- or copolymer according to the present invention preferably contains component (A) in an amount of 40 to 60, more preferably 44 to 56.wt% and component (B) in an amount of 40 to 60 and preferably 44 to 56 wt%.

It is a great advantage of the present invention that the polyolefin homo- or copolymer has an improved crystallization time of more than 55 minutes when being blended with a warping pigment in an amount of up to 1.5 wt.-% with respect to the total composition. Preferably, the crystallization time is more than 60 minutes, more preferably more than 80 minutes and most preferably more than 100 minutes. The crystallization time refers to the time measured in a dissolution re-crystallization measurement comprising two steps as explained in the experimental part.

The present invention further relates to a cable comprising a jacket including the polyolefin homo- or copolymer and a pigment. The pigment generally is present in an amount of up to 2.5 wt.-% and preferably 1.5 wt.-% with respect to the jacket. The pigment is introduced by a pigment masterbatch which typically contains 25 to 75 wt% of pigment. Generally up to 2.5 wt% (with respect to the total composition) of said pigment master batch are added to the polyolefin homo- or copolymer. In a preferred embodiment, the cable according to the present invention includes a pigment selected from inorganic or organic pigments. Organic pigments are generally preferred from an environmental point of view because they do not contain heavy metals. Additionally, organic pigments show a high color strength, right shade and high saturation. Red, yellow, orange and violet pigments for pigmented cable jackets may be chosen from the group of pigments of PY168, PY93, PY95, PY199, PY191:1 PY20, PY180, PY181, PY191, PY62, PO71, PO64, PO72, PR220, PR177, PR53:1, PR272, PR254, PR48:3, PR57:1, PR202, PR122, PR48:2, PR170, PR247, PR247:1, PV19 and PV37. Further, pigments may be selected from PY168, PY93, PY95, PY199, PY191,:1, PB28, PB36, PG17, PG19, PG26, PG50 and PB29. The abbreviations given for the pigments, e.g. PB29 refer to the classification of pigments in the color index published by the Society of Dyers and Colorists and the American Association of Textile Chemists and Colorists. In this color index, the general formula or and chemical constitution are listed for each pigment. In a preferred embodiment, the cable according to the present invention does comprise a jacket free of carbon black.

The present invention further relates to the use of the polyethylene homo- or copolymer according to the present invention as a power cable jacket.

### Experimental

The melt flow rate (MFR₂) of the polyolefin homo- or copolymer according to the present invention is determined in accordance with ISO 1133 at 190°C at a load of 2.16 kg.

The dissolution re-crystallization method comprises two steps, namely preparation of the sample and microscopic analysis of the prepared sample with or without added pigment masterbatch. In the first step, approximately 0.1 g material is added to a 250 ml e-flask. 50 ml of xylene are added and the resulting mixture is stirred. The e-flask is put on a heating plate and the sample is dissolved in its entirety under stirring at temperature so that the solvent is boiling. Once the polymer is fully dissolved, the flask is removed from the heater and 2 to 3 droplets of the solution are applied on a cover glass one at a time by a pasteur pipette. The cover glasses must be free from dust, since dust may initiate crystallization. Dust can be removed by washing off the glasses prior to use with the solvent used. The polymer film should be continuous but thin. Before further handling, the samples are left to let the solvent evaporate.

In the microscopic analysis, the group is examined as to crystallization. Before the analysis, the microscope is adjusted by a Köhler adjustment. The microscope is equipped with an ELWD objective (extra long working distance). In the present examples, a 4 x ELWD objective was used. A polarizer, an analyzer and a lambda plate are used to make the crystallides spherulites visible. By using a lambda plate, the wavelengths of the transmitted light can be altered to obtain a better visibility. The polarizer is adjusted to obtain perpendicular alignment of the features without the lambda plate.

The analyses are performed in a Lincoln hot stage equipment. The cover glass with the thin polymer film is placed inside the central ring in the hot stage apparatus, which is placed on the microscope table. After adjusting the focus, the temperature program listed below is initiated. The course of events is followed in the microscope. With the temperature program, a small flow of nitrogen is led through the hot stage chamber to prevent oxidation of the sample. Photos can be taken throughout and after the re-crystallization of the polymer composition. The following temperature program was used (dynamic crystallization):

| | |
|---|---|
| Melting phase: | room temperature to 210°C at a heating rate of 50°C/min |
| Isothermal phase: | 210°C/5 min |
| Cooling phase | 210 to 130°C at the cooling rate of 20°C/min |
| Crystallization phase: | 530°C downward at a cooling rate of 1°C/min |

Density was measured according to ISO 1183 D and the samples were conditioned according to ISO 18722.

Shrinkage tests were performed according to WO9703124 over a period of 24 hours at 100°C.

### Examples

In the following, the present invention will be further illustrated by way of examples.

### 1. Production of the polyolefin homo- or copolymer

The polyolefin homo- or copolymer was produced in a polymerization plant consisting of a loop reactor connected in series to a gas phase reactor and involving a Ziegler-Natta catalyst under the following conditions: In the loop reactor, a first polymer was produced by polymerization of ethylene (and also a comonomer) in the presence of hydrogen (ratio of hydrogen to ethylene or ethylene/comonomer, respectively 0.4/1). The resulting ethylene homopolymer or the ethylene copolymer, respectively, had a melt flow rate of from 280 to 440 g/10 min and a density in the range of 0.940 to 0.950 g/cm³.

In the second stage, the reaction product of the first stage was transferred to the gas phase reactor whereby the polymerization mixture of ethylene and butene in a ratio of butene/ethylene = 0.22/1, hydrogen/ethylene = 0.03/1). The weight ratio product produced in the first to the second product produced in the (split) reactor was 54:55. All further data are given in the table shown below.

**Table I**

| **Example** | **1** | **2** | **3** | **4** | **5** |
|---|---|---|---|---|---|
| polymer produced in loop reactor | homo | copo | copo | copo | copo |
| MFR₂ [g/10 min] | 410 | 400 | 400 | 440 | 415 |
| density [g/cm³] | 0.970 | 0.961 | 0.961 | 0.952 | 0.953 |
| polymer produced in gas phase reactor | copo | copo | copo | copo | copo |
| calculated density [g/cm³] | 0.918 | 0.928 | 0.925 | 0.935 | 0.929 |
| Density difference (high density fraction - low density fraction) | 0.052 | 0.033 | 0.036 | 0.027 | 0.024 |
| Final composition MFR₂ [g/10 min] | 1.7 | 1.9 | 1.8 | 1.8 | 1.7 |
| density [g/cm³] | 0.941 | 0.943 | 0.941 | 0.943 | 0.940 |
| shrinkage without warping pigment | 0.26 | 0.30 | 0.30 | 0.33 | 0.31 |
| crystallization time [min] including warping pigment in an amount of 1.0 wt-% with respect to the total composition | 15 | 56 | 64 | 82 | 102 |

### 2. Cable extrusion and shrinkage measurement

A pilot cable line with a 60 mm/24D extruder was used for extruding a jacket of 1 mm thickness directly onto a 3 mm single aluminum conductor using a semi-tube dye. The extrusion conditions are given in Table II.

The final MFR₂ of all the examples was adjusted to about 1.8 g / 10min. Additionally the final densities of all the examples were adjusted to about 0.941 g/cm³.

The shrinkage data in table I discloses the shrink back of the inventive resins without warping additives. The data refers to the test methods disclosed in WO9703124.

As can be seen from the Table I examples 1 to 5 do not show essential dif ferences as to the shrinkage without a warping pigment.
The shrink back properties of the resins including a warping pigment can be properly detected by measuring the crystallization time, whereby high crystallization times indicate insensitivity towards the addition of warping pigments. This relationship is based on the extended time for relaxation at higher crystallization times.

It can insofar be seen from table I comparing the crystallization times in examples 1 to 5 and the density difference data that a smaller density difference leads to increased crystallization times and hence lower shrink back in the presence of a nucleating additive. Example 1 shows a very short crystallization time, whereas examples 2 and 3 show acceptable crystallization times, while example 5 and 6 are excellent.

**Table II**

| Conditions for cable extrusion | |
|---|---|
| Conductor | 3.0 mm solid, Al conductor |
| Wall thickness | 1.0 mm |
| Temperature, die | 210°C |
| Distance between die and water bath | 100 cm |
| Temperature water bath | +23°C |
| line velocity | 75m/min |
| Die type | Semi-tube |
| Nipple | 3.65 mm |
| Die | 5.9 mm |
| Screw design | Elise |
| Breaking plate | |

Shrinkage has been measured in percent after 24 hours in a room with constant temperature (+23°C) as well as after 24 hours at a temperature of +100°C. Cable samples measuring approximately 40 cm were measured.

Conveniently, the cable sample is so marked that measurement after the conditionings can be carried out at the same point on the cable sample.

Should the cable be found to shrink during measurement, marks of about 40 cm first have to be made. Then, the length is cut and re-measured. Double samples are taken of each cable that is to be analyzed. The samples are placed in the room with constant temperature for 24 hours, whereupon they are measured, and the shrinkage in percent is then calculated.

All the samples are then placed on a talcum bed at +100°C for 24 hours. The samples are then measured, and the total shrinkage value in per cent is calculated on the base of the initial length.

## Claims

1. Polyolefin homo- or copolymer comprising a component (A) and a component (B), wherein components (A) and (B) have different average molecular weights , and wherein the absolute value of the density difference of component (A) and component (B) is below 0.037 g/cm³ and wherein the polyolefin homo- or copolymer comprises more than 93 mol.% ethylene and has a density of greater than 0.925 g/cm³.

2. Polyolefin homo- or copolymer according to claim 1 having a MFR₂ of 0.1-3.0 g/10 min.

3. Polyolefin homo- or copolymer according to claims 1 or 2 having a density of greater than 0.935 g/cm³.

4. Polyolefin homo- or copolymer according to any of the preceding claims, wherein component (A) has a density of 0.945 to 0.965 g/cm³.

5. Polyolefin homo- or copolymer according to any of the preceding claims, wherein component (A) has a MFR₂ of 200 - 600 g/10 min.

6. Polyolefin homo- or copolymer according to any of the preceding claims, wherein component (B) has a density of 0.880 - 0.936 g/cm³.

7. Polyolefin homo- or copolymer according to any of the preceding claims, wherein component (B) has a MFR₂ of 0.01 - 0.8 g/10min.

8. Polyolefin homo- or copolymer according to any of the preceding claims comprising at least one comonomer, wherein the comonomer is selected from C₃ - C₁₂ alpha olefins.

9. Polyolefin homo- or copolymer according to claim 8, wherein the at least one comonomer is selected from propylene, 1-butene, 4-methyl-1-pentene, 1-hexene, 1 octene.

10. Polyolefin homo- or copolymer according to claim 8 or claim 9, wherein the comonomer content with respect to the Polyolefin homo- or copolymer is in the range of 0.02 - 5 mol%.

11. Polyolefin homo- or copolymer according to any of the preceding claims, wherein component (A) is made in a loop reactor.

12. Polyolefin homo- or copolymer according to any of the preceding claims, wherein component (B) is made in a gas phase reactor.

13. Polyolefin homo- or copolymer according to any of the preceding claims wherein component (A) is present in an amount of 40 - 60 wt.-% and component (B) is present in an amount of 40 - 60wt.-%.

14. Polyolefin homo- or copolymer according to any of the preceding claims further comprising a warping pigment in an amount of up to 1.5 wt.-% with respect to the total composition, whereby the total composition has a crystallisation time of higher than 55 min.

15. Cable comprising a jacket comprising the polyolefin homo- or copolymer according to any of the preceding claims and a pigment.

16. Cable according to claim 15, wherein the pigment is present in an amount of up to 2.5 wt.% with respect to the jacket.

17. Cable according to claim 15 or 16, wherein the pigment is selected from PY 168, PY93, PY95, PY 199, PY 191:1 PY20, PY 180, PY181, PY191, PY62, PO71, PO64, PO72, PR220, PR177, PR53:1, PR272, PR254, PR48:3, PR57:1, PR202, PR122, PR48:2, PR170, PR247, PR247:1, PV19, PV37, PY168, PY93, PY95, PY199, PY191,:1, PB28, PB36, PG17, PG19, PG26, PG50 and PB29.

18. Cable according to any of claims 16 to 18, wherein the jacket is free of carbon black.

19. Use of a polyethylene homo- or copolymer according to any of claims 1 to 15 as a power cable jacket.

## Amended claims

### Amended claims in accordance with Rule 137(2) EPC.

**1.** Polyolefin homo- or copolymer comprising a component (A) having an MFR₂ from 100 to 1000g/10min and a component (B), wherein components (A) and (B) have different average molecular weights , and wherein the absolute value of the density difference of component (A) and component (B) is below 0.037 g/cm³ and wherein the polyolefin homo- or copolymer comprises more than 93 mol.% ethylene and has a density of greater than 0.925 g/cm³.

**2.** Polyolefin homo- or copolymer according to claim 1 having a MFR₂ of 0.1-3.0 g/ 10 min.

**3.** Polyolefin homo- or copolymer according to claims 1 or 2 having a density of greater than 0.935 g/cm³.

**4.** Polyolefin homo- or copolymer according to any of the preceding claims, wherein component (A) has a density of 0.945 to 0.965 g/cm³.

**5.** Polyolefin homo- or copolymer according to any of the preceding claims, wherein component (A) has a MFR₂ of 200 - 600 g/10 min.

**6.** Polyolefin homo- or copolymer according to any of the preceding claims, wherein component (B) has a density of 0.880 - 0.936 g/cm³.

**7.** Polyolefin homo- or copolymer according to any of the preceding claims, wherein component (B) has a MFR₂ of 0.01 - 0.8 g/10min.

**8.** Polyolefin homo- or copolymer according to any of the preceding claims comprising at least one comonomer, wherein the comonomer is selected from C₃ - C₁₂ alpha olefins.

**9.** Polyolefin homo- or copolymer according to claim 8, wherein the at least one comonomer is selected from propylene, 1-butene, 4-methyl-1-pentene, 1-hexene, 1 octene.

**10.** Polyolefin homo- or copolymer according to claim 8 or claim 9, wherein the comonomer content with respect to the Polyolefin homo-or copolymer is in the range of 0.02 - 5 mol%.

**11.** Polyolefin homo- or copolymer according to any of the preceding claims, wherein component (A) is made in a loop reactor.

**12.** Polyolefin homo- or copolymer according to any of the preceding claims, wherein component (B) is made in a gas phase reactor.

**13.** Polyolefin homo- or copolymer according to any of the preceding claims wherein component (A) is present in an amount of 40 - 60 wt.-% and component (B) is present in an amount of 40 - 60wt.-%.

**14.** Polyolefin homo- or copolymer according to any of the preceding claims further comprising a warping pigment in an amount of up to 1.5 wt.-% with respect to the total composition, whereby the total composition has a crystallisation time of higher than 55 min.

**15.** Cable comprising a jacket comprising the polyolefin homo- or copolymer according to any of the preceding claims and a pigment.

**16.** Cable according to claim 15, wherein the pigment is present in an amount of up to 2.5 wt.% with respect to the jacket.

**17.** Cable according to claim 15 or 16, wherein the pigment is selected from PY168, PY93, PY95, PY199, PY191:1 PY20, PY180, PY181, PY191, PY62, PO71, PO64, PO72, PR220, PR177, PR53:1, PR272, PR254, PR48:3, PR57:1, PR202, PR122, PR48:2, PR170, PR247, PR247:1, PV19, PV37, PY168, PY93, PY95, PY199, PY191,:1, PB28, PB36, PG17, PG19, PG26, PG50 and PB29.

**18.** Cable according to any of claims 16 to 18, wherein the jacket is free of carbon black.

**19.** Use of a polyethylene homo- or copolymer according to any of claims 1 to 15 as a power cable jacket.
